# EUROPÄISCHE PATENTSCHRIFT

(11) **EP 1 353 086 B1**
(45) Veröffentlichungstag und Bekanntmachung des Hinweises auf die Patenterteilung: **26.03.2008**
(21) Anmeldenummer: 02008361.4
(22) Anmeldetag: 12.04.2002
(51) Int. Cl.: F16F 15/123

(54) **Torsionsschwingungsdämpfer sowie Versteifungselement für einen solchen**
Torsional vibration damper and stiffening element for such a damper
Amortisseur de vibrations torsionelles et élément de rigidification pour un tel amortisseur

(43) Veröffentlichungstag der Anmeldung: 15.10.2003
(73) Patentinhaber: BorgWarner Inc., Auburn Hills, MI 48326 (US)
(72) Erfinder: Kroll, Jürgen, Dr., 68775 Ketsch (DE); Bastel, Norbert, 68794 Obernhausen (DE); Ebner, Till, 64319 Pfungstadt (DE)
(74) Vertreter: Patentanwälte Westphal, Mussgnug & Partner

(56) Entgegenhaltungen:
- EP-A- 0 216 476
- EP-A- 0 826 899
- DE-A- 19 751 029
- GB-A- 2 297 602
- US-A- 4 884 996

## Beschreibung

Die Erfindung betrifft einen Torsionsschwingungsdämpfer, insbesondere für ein Kraftfahrzeug, gemäß dem Oberbegriff des Anspruchs 1 sowie ein Versteifungselement für einen solchen Torsionsschwingungsdämpfer gemäß dem Patentanspruch 13.

Es ist allgemein bekannt, dass der Antriebsstrang eines Kraftfahrzeugs durch die zündungsbedingte Drehungleichförmigkeit des Motors zu Drehschwingungen angeregt wird. Insbesondere entspricht bei einer bestimmten Motordrehzahl die Zündfrequenz gerade der sogenannten Eigenfrequenz des Antriebsstrangs, bei der besonders große Schwingungsausschläge auftreten, die Getrieberassel- und Karosseriebrummgeräusche verursachen können. Das Rasseln entsteht durch das Aufeinanderschlagen der spielbehafteten und nicht im Kraftfluß liegenden Zahnräder und Synchronringe im Getriebe. Die Karosseriegeräusche entstehen dadurch, dass die Schwingungen teilweise auch über die Lagerung des Motor-Getriebe-Blocks und der Antriebswelle in die Karosserie übertragen werden. Mit einem Torsionsschwingungsdämpfer wie er beispielsweise Gegenstand der vorliegenden Patentanmeldung ist - lassen sich derartige Geräusche beseitigen oder zumindest stark dämpfen, da er eine elastische Verdrehung zwischen Kurbelwelle und Eingangswelle des Getriebes ermöglicht.

Torsionsschwingungsdämpfer sind ganz allgemein in einer Vielzahl von Abwandlungen bekannt. Exemplarisch sei auf die deutschen Offenlegungsschriften DE 41 28 868 A1, DE 197 29 999 A1 und DE 199 58 813 A1 hingewiesen, in denen verschiedene Ausführungsvarianten beschrieben sind. Ein solcher Torsionsschwingungsdämpfer umfasst als wesentliche Bestandteile ein antriebsseitiges Übertragungselement und ein abtriebsseitiges Übertragungselement. Beide Übertragungselemente sind um eine Drehachse gegeneinander verdrehbar und über eine oder mehrere Schraubendruckfedern elastisch miteinander verbunden.

Ganz allgemein tritt bei derartigen Torsionsschwingungsdämpfern das Problem auf, dass die das abtriebsseitige Übertragungselement mit dem antriebsseitigen Übertragungselement elastisch koppelnden Schraubendruckfedern bei höheren Drehzahlen fliehkraftbedingt über deren Erstreckungslänge radial nach außen gekrümmt werden. Bei zunehmender Stauchung der Schraubendruckfeder kommt die in Druckrichtung dem freien Ende der zugeordneten Radialabstützung benachbarte Windung an dieser Radialabstützung in Anlage. Dadurch kann das die Verformung der Schraubendruckfeder bewirkende eingeleitete Drehmoment von dieser durch die Radialabstützung an einer weiteren Bewegung gehemmte Windung nicht mehr auf die radial innerhalb der Radialabstützung verbleibenden Windungen geleitet werden. Dies hat zur Folge, dass sich der Verformungsweg der Schraubendruckfeder um den Anteil der letztgenannten Windungen verkürzt, was schließlich dazu führt, dass die einzelnen Schraubendruckfedern Belastungen ausgesetzt werden, welche leicht jenseits ihrer vorbestimmten Grenzwerte liegen.

Aus dem Stand der Technik sind nun verschiedene Maßnahmen bekannt, um die geschilderte Problematik zu entschärfen. So ist beispielsweise aus der DE 197 29 999 A1 bekannt geworden, radial innerhalb der zylinderförmigen Innenwandung der Schraubendruckfedern sogenannte Versteifungselemente in der Art langgestreckter zylindrischer Stifte einzusetzen, welche die Schraubendruckfedern an einer fliehkraftbedingten Durchbiegung hindern.

Obwohl sich letztgenannte Ausführungsform eines Torsionsschwingungsdämpfers gemäß der DE 197 29 999 A1, von der die Erfindung ausgeht, dem Grunde nach bewährt hat, treten bei derartigen Ausführungsformen weiterhin Klappergeräusche auf. Ähnlich verhält es sich mit den aus der EP 0 216 476 A, der EP 0 826 899 A und der DE 197 51 029 A bekannten Torsionsschwingungsdämpfern.

Der Erfindung liegt somit die Aufgabe zugrunde, die bekannten Torsionsschwingungsdämpfer derart auszugestalten und weiterzubilden, dass solche Klappergeräusche nicht mehr auftreten oder zumindest deutlich in ihrer Lautstärke reduziert werden.

Diese Aufgabe wird durch einen Torsionsschwingungsdämpfer der gattungsgemäßen Art mit Hilfe der Merkmale des kennzeichnenden Teils des Anspruches 1 erfindungsgemäß gelöst.

Vorteilhafte Ausführungen und Weiterbildungen der Erfindung sind in den Unteransprüchen angegeben.

Der wesentliche Gedanke der Erfindung besteht darin, dass die jeweiligen innerhalb der Schraubenfedern angeordneten Versteifungselemente Festhaltevorrichtungen aufweisen, welche die relative Verschiebbarkeit der jeweiligen Versteifungselemente gegenüber den sie umgebenden Schraubendruckfedern begrenzen, wobei die Festhaltevorrichtung eine Fixiereinrichtung zum unmittelbaren Fixieren der Schraubendruckfeder an dem Versteifungselement umfasst und die Fixiereinrichtung eine Klemmscheibe bzw. mehrere Klemmscheiben oder einen Nocken bzw. mehrere Nocken umfasst, welche radial abstehend an dem Versteifungselement angeordnet sind. Die Folge ist, dass sich weder die Federn noch die Versteifungselemente beliebig innerhalb des sie umgebenden Gehäuses des Torsionsschwingungsdämpfers bewegen können. Ein das Klappergeräusch verursachendes Anschlagen der Schraubendruckfedern und der Versteifungselemente am Gehäuse sowie an den Übertragungselementen wird dadurch weitgehend vermieden.

Es hat sich gezeigt, dass sich in einfacher Weise eine Festhaltevorrichtung für eine Schraubendruckfeder dadurch realisieren lässt, indem an dem von der Schraubendruckfeder umgriffenen Versteifungselement ein Federteller angeordnet wird, auf welchem die Schraubendruckfeder einendseitig abgestützt ist. Da die Schraubendruckfeder auch im unbelasteten Zustand des Torsionsschwingungsdämpfers das abtriebsseitige Übertragungselement unter (wenn auch geringer) Vor(druck)spannung mit dem antriebsseitigen Übertragungselement verbindet, wird durch diese erfindungsgemäße Variante das Versteifungselement stets unbeweglich an dem auf dem Federteller aufsitzenden Ende der Schraubendruckfeder gehalten. Klappergeräusche durch Aufeinanderschlagen des Versteifungselements und der Übertragungselemente oder durch Aufeinanderschlagen der Schraubendruckfeder und der Übertragungselemente können nicht mehr auftreten.

Erfindungsgemäß ist vorgesehen, dass die Erstreckungslänge eines Versteifungselements gerade so groß gewählt ist, dass ein auf Block gehen der Schraubendruckfeder verhindert wird. Hierdurch wird vermieden, dass die Schraubenfeder zu hohen mechanischen Belastungen ausgesetzt wird, die zum Bruch derselben führen könnten.

Es ist für den Fachmann unmittelbar einsichtig, dass das Versteifungselement dabei selbst in Erstreckungsrichtung der Schraubendruckfeder in gewissem Umfang komprimiert sein kann. Für den Fall, dass das Versteifungselement formstabil ausgebildet ist, ist erfindungsgemäß vorgesehen, dass die Erstreckungslänge des Versteifungselements größer als die größtmögliche Kompression (Stauchung) der Schraubendruckfeder ist.

Erfindungsgemäß ist vorgesehen, dass die in Rede stehende Schraubendruckfeder nicht nur ein Versteifungselement umgreift, sondern mehrere. Eine besonders vorteilhafte Variante besteht darin, dass die Schraubendruckfeder zumindest auf einem Teil ihrer Erstreckungslänge zwei (in axialer Richtung der Schraubendruckfeder) hintereinander angeordnete Versteifungselemente umgreift, welche jeweils einendseitig wenigstens einen Federteller tragen. Die Versteifungselemente sind derart in Bezug auf die Schraubendruckfeder angeordnet, dass die Schraubendruckfeder mit ihrem einen Stirnende auf dem Federteller des einen Versteifungselements und mit ihrem anderen Stirnende auf dem Federteller des anderen Versteifungselements abgestützt ist.

Entsprechend der vorstehend beschriebenen Ausführung mit einem einzigen Versteifungselement ist hier erfindungsgemäß vorgesehen, dass die Summe der Erstreckungslängen beider Versteifungselemente gerade so groß gewählt ist, dass ein auf Block gehen der Schraubendruckfeder verhindert wird.

Aus der DE 197 29 999 A1 sind auch Torsionsschwingungsdämpfer bekannt bei denen zwei koaxial ineinanderliegende Schraubendruckfedern ein Versteifungselement umgreifen. Für derartige Ausführungsformen mit zwei oder mehr koaxial ineinanderliegenden Schraubendruckfedern ist erfindungsgemäß vorgesehen, dass die Festhaltevorrichtung zwei oder mehr von dem Versteifungselement (oder von den Versteifungselementen) getragene und in axialer Richtung beabstandete Federteller umfasst, auf welchen jeweils wenigstens eine der koaxial ineinanderliegenden Schraubendruckfedern einendseitig abgestützt ist.

Bei einem Torsionsschwingungsdämpfer gemäß der DE 197 29 999 A1 bei dem die Schraubendruckfedern zwischen den Stirnseiten von Stopperschuhen und/oder Gleitschuhen angeordnet sind, ist erfindungsgemäß vorgesehen, dass das jeweilige Versteifungselement verschiebefest mit einer Stirnseite des entsprechenden Stopperschuhs oder des entsprechenden Gleitschuhs verbunden ist. Es kann im übrigen auch einstückig mit dem Stopperschuh oder dem Gleitschuh ausgebildet sein.

Ein erfindungsgemäßes Versteifungselement besteht idealerweise aus dem hochfesten Hochleistungskunststoff Polyamid 4.6 mit 50% Glasfaseranteil. Im Einsatzbereich ist der Kunststoff öl- und hitzebeständig und kann als Spritzgußteil kostengünstig hergestellt werden.

Drei Ausführungsbeispiele der Erfindung sind in den Zeichnungen dargestellt und werden im folgenden näher beschrieben. Es zeigen:
- Figur 1a) -: eine Teilansicht eines Torsionsschwingungsdämpfers im unbelasteten Zustand mit erfindungsgemäß ausgeführtem Versteifungselement in Form eines Kunststoffblockstifts mit Federteller
- Figur 1b) -: einen Ausschnitt des Torsionsschwingungsdämpfers mit erfindungsgemäßem Kunststoffblockstift mit Federteller gemäß der Figur 1a) in belastetem Zustand in vergrößerter Querschnittsdarstellung
- Figur 2 -: den erfindungsgemäßen Kunststoffblockstift mit Federteller gemäß den Figuren 1a) und 1b)
- Figur 3 -: eine zweite Ausführungsvariante eines erfindungsgemäßen Kunststoffblockstifts mit Federteller
- Figur 4 -: eine dritte Ausführungsvariante eines erfindungsgemäßen Kunststoffblockstifts mit Federteller
- Figur 5 -: eine vierte Ausführungsvariante eines erfindungsgemäßen Kunststoffblockstifts mit Federteller
- Figur 6 -: eine fünfte Ausführungsvariante eines erfindungsgemäßen Kunststoffblockstifts mit Federteller
- Figur 7 -: eine sechste Ausführungsvariante eines erfindungsgemäßen Kunststoffblockstifts mit Federteller

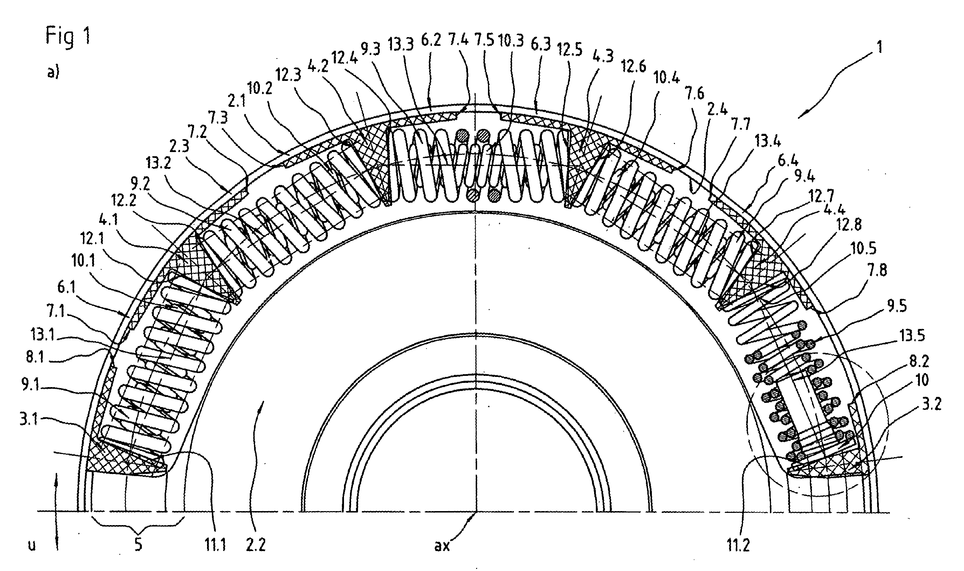

Die Figur 1a) zeigt ein Ausführungsbeispiel eines Torsionsschwingungsdämpfers 1 mit erfindungsgemäß ausgebildetem Versteifungselement in Form eines Kunststoffblockstifts 14 mit Federteller 15. Der Torsionsschwingungsdämpfer 1 ist als Zweimassenschwungrad ausgebildet, wobei die erste Masse als antriebsseitiges Übertragungselement 2.1 und die zweite Masse als abtriebsseitiges Übertragungselement 2.2 ausgebildet ist. Das abtriebsseitige Übertragungselement 2.2 und das antriebsseitige Übertragungselement 2.1 sind gegeneinander um die Drehachse ax drehauslenkbar. Beide Übertragungselemente 2.1, 2.2 sind über Energiespeicher in Form von Schraubendruckfedern 9.1, 9.2, 9.3, 9.4, 9.5, 10.1, 10.2, 10.3, 10.4, 10.5 miteinander verbunden. Die Schraubendruckfedern 9.1, 9.2, 9.3, 9.4, 9.5, 10.1, 10.2, 10.3, 10.4, 10.5 miteinander verbunden. Die Schraubendruckfedern 9.1, 9.2, 9.3, 9.4, 9.5, 10.1, 10.2, 10.3, 10.4, 10.5 sind durch an jedem der Übertragungselemente 2.1, 2.2 vorgesehene Ansteuerelemente, nachfolgend als Stopperschuhe 3.1, 3.2 bezeichnet, beaufschlagbar.

Der Torsionsschwingungsdämpfer 1 gemäß der Figur 1a) zeigt zwei derartige Stopperschuhe 3.1, 3.2 von denen einer mit dem Übertragungselement 2.1 und einer mit dem Übertragungselement 2.2 drehfest verbunden ist. Zwischen diesen Stopperschuhen 3.1, 3.2 sind im vorliegenden Beispiel fünf sogenannte Federstufen in einem konzentrisch zur Drehachse ax umlaufenden Kanal 5 hintereinanderliegend, eine sogenannte Reihenschaltung von Federstufen bildend, und durch sogenannte Gleitschuhe 4.1, 4.2, 4.3, 4.4 beabstandet aneinandergereiht. Jede Federstufe besteht dabei im vorliegenden Fall aus zwei ineinandergesteckten (parallel geschalteten) Schraubendruckfedern 9.1, 9.2, 9.3, 9.4, 9.5, 10.1, 10.2, 10.3, 10.4, 10.5.

Die sich an die Stopperschuhe 3.1, 3.2 anschließenden Federstufen stützen sich dabei jeweils einstirnseitig gegen die entsprechenden Stirnseiten 11.1, 11.2 der Stopperschuhe 3.1, 3.2 ab. Andernstirnseitig stützen sich diese letztgenannten Federstufen gegen die entsprechenden Stirnseiten 12.1, 12.2, 12.3, 12.4, 12.5, 12.6, 12.7, 12.8 der Gleitschuhe 4.1, 4.2, 4.3, 4.4 ab.

Während die Stopperschuhe 3.1, 3.2 drehfest mit jeweils einem der Übertragungselemente 2.1, 2.2 verbunden sind, sind die Gleitschuhe 4.1, 4.2, 4.3, 4.4 mit ihren jeweiligen Außenwandungen 6.1, 6.2, 6.3, 6.4 an der zylindrischen Innenwandung 2.4 eines hier als Bestandteil des antriebsseitigen Übertragungselements 2.1 ausgeführten und radial außerhalb der Federstufen, konzentrisch zu der Drehachse ax angeordneten Rings 2.3 verschieblich geführt. Die Stopperschuhe 3.1, 3.2 sowie die Gleitschuhe 4.1, 4.2, 4.3, 4.4 sind in dem der Innenwandung 2.4 des Rings 3.2 zugewandten Außenwandungsbereich in Umfangsrichtung u verlängert ausgeführt. Die Verlängerungen der Gleitschuhe 4.1, 4.2, 4.3, 4.4 dienen der Führung derselben auf dem Ring 2.3 und der Reduzierung der Flächenpressung gegenüber der Innenwandung 2.4 des Rings 2.3. Darüberhinaus können deren freien Enden 7.1, 7.2, 7.3, 7.4, 7.5, 7.6, 7.7, 7.8 zusammen mit den freien Enden 8.1, 8.2 der Stopperschuhe 3.1, 3.2 als Verdrehwinkelanschlag zur Vermeidung eines Ausblockens der Federstufen bzw. zur Verhinderung eines auf Block Gehens der Federn dienen.

Zur Verhinderung fliehkraftbedingter Verformungen der einzelnen Schraubendruckfedern 9.1, 9.2, 9.3, 9.4, 9.5, 10.1, 10.2, 10.3, 10.4, 10.5 der Federstufen, umgreifen die beiden Schraubendruckfedern 9.1, 9.2, 9.3, 9.4, 9.5, 10.1, 10.2, 10.3, 10.4, 10.5 einer Federstufe ein Versteifungselement, welches in der Form eines Kunststoffblockstifts 14 ausgeführt ist. Im vorliegenden Fall ist der Kunststoffblockstift 14 zylinderförmig ausgebildet und so von den ineinanderliegenden Schraubendruckfedern 9.1, 9.2, 9.3, 9.4, 9.5, 10.1, 10.2, 10.3, 10.4, 10.5 einer jeweiligen Federstufe umfasst, dass dessen Symmetrieachse 14.2 im wesentlichen mit den Federachsen 13.1, 13.2, 13.3, 13.4, 13.5 der Schraubendruckfedern 9.1, 9.2, 9.3, 9.4, 9.5, 10.1, 10.2, 10.3, 10.4, 10.5 der jeweiligen Federstufen zusammenfällt.

Wenn eine oder mehrere der in Reihe geschalteten Federstufen eine geringere Federrate aufweisen als die übrigen kann dies bei sehr hohen zu übertragenden Drehmomenten zu einer Überlastung der entsprechenden Schraubendruckfedern 9.1, 9.2, 9.3, 9.4, 9.5, 10.1, 10.2, 10.3, 10.4, 10.5 der entsprechenden Federstufe führen. Insbesondere Belastungen, die ein Vielfaches der sogenannten Blockkraft der Schraubendruckfedern 9.1, 9.2, 9.3, 9.4, 9.5, 10.1, 10.2, 10.3, 10.4, 10.5 betragen führen häufig zu einer Zerstörung dieser Federn 9.1, 9.2, 9.3, 9.4, 9.5, 10.1, 10.2, 10.3, 10.4, 10.5. Um ein derartiges Ausblokken zu verhindern ist neben der o.a. Ausführung der Gleit- und Stopperschuhe 4.1, 4.2, 4.3, 4.4, 3.1, 3.2 mit Verlängerungen vorgesehen, dass die Länge der Kunststoffblockstifte 14 gerade so gewählt ist, dass diese bereits vor Erreichen der maximal zulässigen Blockkraft der in Rede stehenden Schraubendruckfedern 9.1, 9.2, 9.3, 9.4, 9.5, 10.1, 10.2, 10.3, 10.4, 10.5 jeweils stirnseitig 14.1, 15.1 gegen die jeweiligen Stirnseiten 11.1, 11.2, 12.1, 12.2, 12.3, 12.4, 12.5, 12.6, 12.7, 12.8 der Gleitschuhe 4.1, 4.2, 4.3, 4.4 bzw. Stopperschuhe 3.1, 3.2 in Anschlag gehen und auf diese Weise kompressionsbegrenzend wirken. Diesen Zustand entnimmt man beispielsweise der Zeichnungsfigur 1b). Die übertragene Blockkraft wird dabei auf den Kunststoffblockstift 14 und die Stopper- und Gleitschuhe 3.1, 3.2, 4.1, 4.2, 4.3, 4.4 verteilt, so dass das Gesamtsystem stabilisiert wird.

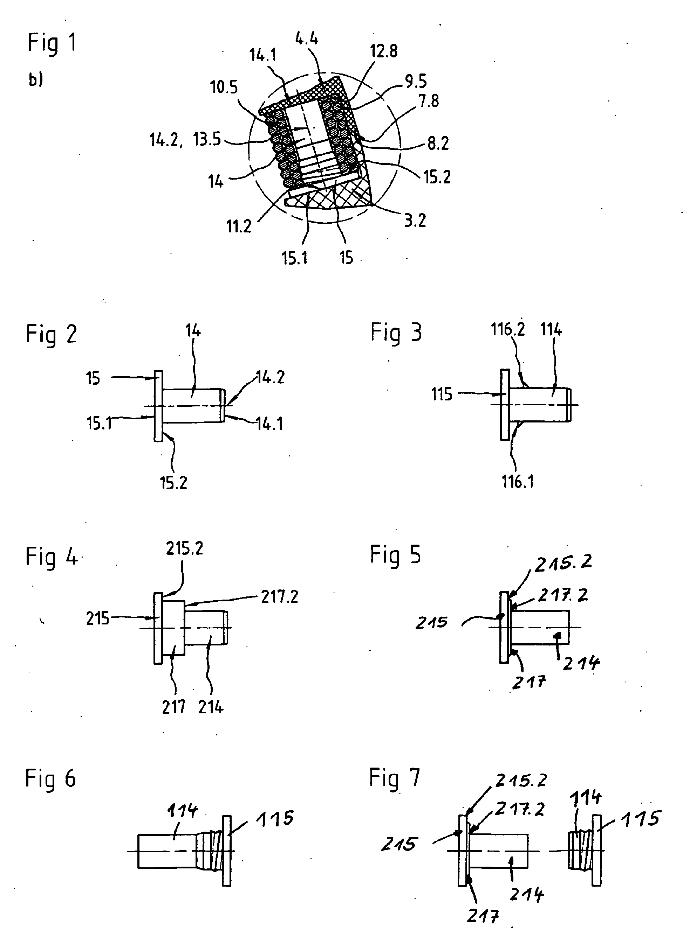

Um ein mit einer Geräuschentwicklung verbundenes Hin- und Herfallen des Kunststoffblockstifts 14 zu verhindern, ist erfindungsgemäß vorgesehen, dass an einem stirnseitigen Ende 15.1 des im wesentlichen zylinderförmig ausgebildeten Kunststoffblockstifts 14 ein Federteller 15 angeordnet ist, auf dessen Federauflage 15.2 sich die Schraubendruckfedern 9.5, 10.5 einstirnseitig abstützen (Fig. 1b)). Der Federteller 15 ist dabei vorzugsweise einstückig, jedoch wenigstens axial unverschieblich, an dem Kunststoffblockstift 14 befestigt (Fig. 2).

Um innenliegende Schraubendruckfedern 10.1, 10.2, 10.3, 10.4, 10.5 mit gegenüber den äußeren Schraubendruckfedern 9.1, 9.2, 9.3, 9.4, 9.5 geringerer Erstreckungslänge (im entspannten Zustand) gegen ein geräuschproduzierendes Hin- und Herfallen zu sichern, ist erfindungsgemäß vorgesehen, dass diese unmittelbar an dem Kunststoffblockstift 14 fixiert werden. Die Art der Fixierung kann in unterschiedlicher Art und Weise erfolgen. Möglichkeiten umfassen u.a. Aufschrauben (Fig. 6, 7), Aufkleben, Einpassen/Aufpressen, Aufclipsen (Fig. 3) und ein Fixieren mit einem zusätzlichen Fixierelement (z.B. mit Klemmscheiben). Die Figur 3 zeigt eine Ausführungsvariante, bei der der Kunststoffblockstift 114 neben einem Federteller 115 der vorbeschriebenen Art zum Fixieren einer inneren Schraubenduckfeder 10.1, 10.2, 10.3, 10.4, 10.5 radial abstehende Nocken 116.1, 116.2 zum Aufclipsen der inneren Schraubendruckfeder 10.1, 10.2, 10.3, 10.4, 10.5 aufweist.

Längenunterschiede sowie Unterschiede in der Blocklänge der Schraubendruckfedern 10.1, 10.2, 10.3, 10.4, 10.5, 9.1, 9.2, 9.3, 9.4, 9.5 lassen sich auch dadurch ausgleichen, dass an dem Kunststoffblockstift mehrere in axialer Richtung beabstandete Federteller vorgesehen sind, auf welchen jeweils wenigstens eine der koaxial ineinanderliegenden Schraubendruckfedern 10.1, 10.2, 10.3, 10.4, 10.5, 9.1, 9.2, 9.3, 9.4, 9.5 einendseitig abstützbar ist. Derartige Ausführungsformen entnimmt man beispielsweise den Figuren 4, 5 und 7. Hier weist der Kunststoffblockstift 214 neben einem vorbeschriebenen (Au- ßen-) Federteller 215 mit vergleichsweise großem Außendurchmesser in axialer Richtung zur Mitte hin versetzt einen weiteren (Innen-) Federteller 214 mit kleinerem Außendurchmesser auf. Auf der Federauflage 215.2 des Außenfedertellers 215 ist nun eine äußere Schraubendruckfeder 9.1, 9.2, 9.3, 9.4, 9.5, auf der Federauflage 217.2 des Innenfedertellers 217 ist die entsprechende innere Schraubendruckfeder 10.1, 10.2, 10.3, 10.4, 10.5 einendseitig abstützbar.

### Bezugszeichenliste

- 1: Torsionsschwingungsdämpfer
- 2.1: antriebsseitiges Übertragungselement
- 2.2: abtriebsseitiges Übertragungselement
- 2.3: Ring des antriebsseitigen Übertragungselements
- 2.4: zylindrische Innenwandung des Rings 2.3
- 3.1: Stopperschuh
- 3.2: Stopperschuh
- 4.1: Gleitschuh
- 4.2: Gleitschuh
- 4.3: Gleitschuh
- 4.4: Gleitschuh
- 5: konzentrisch zur Drehachse ax umlaufender Kanal
- 6.1: Außenwandung des Gleitschuhs 4.1
- 6.2: Außenwandung des Gleitschuhs 4.2
- 6.3: Außenwandung des Gleitschuhs 4.3
- 6.4: Außenwandung des Gleitschuhs 4.4
- 7.1: erstes freies Ende des Gleitschuhs 4.1
- 7.2: zweites freies Ende des Gleitschuhs 4.1
- 7.3: erstes freies Ende des Gleitschuhs 4.2
- 7.4: zweites freies Ende des Gleitschuhs 4.2
- 7.5: erstes freies Ende des Gleitschuhs 4.3
- 7.6: zweites freies Ende des Gleitschuhs 4.3
- 7.7: erstes freies Ende des Gleitschuhs 4.4
- 7.8: zweites freies Ende des Gleitschuhs 4.4
- 8.1: freies Ende des Stopperschuhs 3.1
- 8.2: freies Ende des Stopperschuhs 3.2
- 9.1: äußere Schraubendruckfeder
- 9.2: äußere Schraubendruckfeder
- 9.3: äußere Schraubendruckfeder
- 9.4: äußere Schraubendruckfeder
- 9.5: äußere Schraubendruckfeder
- 10.1: innere Schraubendruckfeder
- 10.2: innere Schraubendruckfeder
- 10.3: innere Schraubendruckfeder
- 10.4: innere Schraubendruckfeder
- 10.5: innere Schraubendruckfeder
- 11.1: Stirnseite des Stopperschuhs 3.1
- 11.2: Stirnseite des Stopperschuhs 3.2
- 12.1: erste Stirnseite des Gleitschuhs 4.1
- 12.2: zweite Stirnseite des Gleitschuhs 4.1
- 12.3: erste Stirnseite des Gleitschuhs 4.2
- 12.4: zweite Stirnseite des Gleitschuhs 4.2
- 12.5: erste Stirnseite des Gleitschuhs 4.3
- 12.6: zweite Stirnseite des Gleitschuhs 4.3
- 12.7: erste Stirnseite des Gleitschuhs 4.4
- 12.8: zweite Stirnseite des Gleitschuhs 4.4
- 13.1: Federachse der Schraubendruckfedern 9.1, 10.1
- 13.2: Federachse der Schraubendruckfedern 9.2, 10.2
- 13.3: Federachse der Schraubendruckfedern 9.3, 10.3
- 13.4: Federachse der Schraubendruckfedern 9.4, 10.4
- 13.5: Federachse der Schraubendruckfedern 9.5, 10.5
- 14: Kunststoffblockstift
- 14.1: Stirnseite des Kunststoffblockstifts 14
- 14.2: Symmetrieachse des Kunststoffblockstifts 14
- 15: Federteller
- 15.1: Stirnseite des Federtellers 15
- 15.2: Federauflage des Federtellers 15

- 114: Kunststoffblockstift
- 115: Federteller
- 116.1: erster Nocken
- 116.2: zweiter Nocken

- 214: Kunststoffblockstift
- 215: Außenfederteller
- 215.2: Federauflage des Außenfedertellers 215
- 217: Innenfederteller
- 217.2: Federauflage des Innenredertellers 217

- ax: Drehachse
- u: Umfang

## Patentansprüche

1. Torsionsschwingungsdämpfer (1) mit einem antriebsseitigen Übertragungselement (2.1) und einem zu dem antriebsseitigen Übertragungselement (2.1) um eine Achse (ax) drehauslenkbaren abtriebsseitigen Übertragungselement (2.2), das mit dem antriebsseitigen Übertragungselement (2.1) über wenigstens eine Schraubendruckfeder (9.1, 9.2, 9.3, 9.4, 9.5, 10.1, 10.2, 10.3, 10.4, 10.5) verbunden ist, wobei wenigstens eine der Schraubendruckfedern (9.1, 9.2, 9.3, 9.4, 9.5, 10.1, 10.2, 10.3, 10.4, 10.5) zumindest auf einem Teil ihrer Erstreckungslänge wenigstens ein Versteifungselement (14, 114, 214) umgreift, wobei wenigstens ein Versteifungselement (14, 114, 214) eine Festhaltevorrichtung (15, 115, 215, 217, 116.1, 116.2) aufweist, welche die Verschiebbarkeit des wenigstens einen Versteifungselements (14, 114, 214) gegenüber der wenigstens einen der Schraubendruckfedern (9.1, 9.2, 9.3, 9.4, 9.5, 10.1, 10.2, 10.3, 10.4, 10.5) begrenzt, **dadurch gekennzeich-net, dass** die Festhaltevorrichtung eine Fixiereinrichtung (116.1, 116.2) zum Fixieren von wenigstens einer der wenigstens einen Schraubendruckfedern (10.1, 10.2, 10.3, 10.4, 10.5) an dem wenigstens einen Versteifungselement (114) umfasst, wobei die Fixiereinrichtung eine Klemmscheibe bzw. mehrere Klemmscheiben oder einen Nocken bzw. mehrere Nocken (116.1, 116.2) umfasst, welche radial abstehend an dem wenigstens einen Versteifungselement (114) angeordnet sind.

2. Torsionsschwingungsdämpfer (1) nach Anspruch 1, **dadurch gekennzeichnet, dass** die Festhaltevorrichtung wenigstens einen Federteller (15, 115, 215, 217) umfasst, welcher von dem wenigstens einen Versteifungselement (14, 114, 214) getragen ist und auf welchem die wenigstens eine der Schraubendruckfedern (9.1, 9.2, 9.3, 9.4, 9.5, 10.1, 10.2, 10.3, 10.4, 10.5) einendseitig abstützbar ist.

3. Torsionsschwingungsdämpfer (1) nach einem der vorangegangenen Ansprüche, **dadurch gekennzeichnet, dass** die Erstreckungslänge des wenigstens einen Versteifungselements (14, 114, 214) so gewählt ist, dass ein auf Block gehen der wenigstens einen der Schraubendruckfedern (9.1, 9.2, 9.3, 9.4, 9.5, 10.1, 10.2, 10.3, 10.4, 10.5) verhindert wird.

4. Torsionsschwingungsdämpfer (1) nach Anspruch 3 bei dem das Versteifungselement (14, 114, 214) formstabil ausgebildet ist, **dadurch gekennzeichnet, dass** die Erstreckungslänge des wenigstens einen Versteifungselements (14, 114, 214) größer als die größtmögliche Kompression der wenigstens einen der Schraubendruckfedern (9.1, 9.2, 9.3, 9.4, 9.5, 10.1, 10.2, 10.3, 10.4, 10.5) ist.

5. Torsionsschwingungsdämpfer (1) nach einem der vorangegangenen Ansprüche, **dadurch gekennzeichnet, dass** die wenigstens eine der Schraubendruckfedern (9.1, 9.2, 9.3, 9.4, 9.5, 10.1, 10.2, 10.3, 10.4, 10.5) zumindest auf einem Teil ihrer Erstreckungslänge zwei in axialer Richtung (ax) hintereinander angeordnete Versteifungselemente (14, 114, 214) umgreift, welche jeweils einendseitig wenigstens einen Federteller (15, 115, 215, 217) tragen und dass die wenigstens eine Schraubendruckfeder (9.1, 9.2, 9.3, 9.4, 9.5, 10.1, 10.2, 10.3, 10.4, 10.5) einendseitig auf dem wenigstens einen Federteller (15, 115, 215, 217) des einen Versteifungselements (14, 114, 214) und andernendseitig auf dem wenigstens einen Federteller (15, 115, 215, 217) des anderen Versteifungselements (14, 114, 214) abstützbar ist.

6. Torsionsschwingungsdämpfer (1) nach Anspruch 5, **dadurch gekennzeichnet, dass** die Summe der Erstreckungslängen der beiden Versteifungselemente (14, 114, 214) so gewählt ist, dass ein auf Block gehen der wenigstens einen der Schraubendruckfedern (9.1, 9.2, 9.3, 9.4, 9.5, 10.1, 10.2, 10.3, 10.4, 10.5) verhindert wird.

7. Torsionsschwingungsdämpfer (1) nach einem der vorangegangenen Ansprüche, **dadurch ge-kennzeichnet,** dass zwei oder mehr koaxial ineinanderliegende Schraubendruckfedern (9.1, 9.2, 9.3, 9.4, 9.5, 10.1, 10.2, 10.3, 10.4, 10.5) das wenigstens eine Versteifungselement (214) umgreifen und dass die Festhaltevorrichtung zwei oder mehr von dem wenigstens einen Versteifungselement (214) getragene und in axialer Richtung beabstandete Federteller (215, 217) umfasst, auf welchen jeweils wenigstens eine der koaxial ineinanderliegenden Schraubendruckfedern (9.1, 10.1; 9.2, 10.2; 9.3, 10.3; 9.4, 10.4; 9.5, 10.5) einendseitig abstützbar ist.

8. Torsionsschwingungsdämpfer (1) nach einem der vorangegangenen Ansprüche, **dadurch gekennzeichnet, dass** das wenigstens eine Versteifungselement (14, 114, 214) aus Polyamid 4.6 gefertigt ist.

9. Torsionsschwingungsdämpfer (1) nach Anspruch 8, **dadurch gekennzeichnet, dass** das Polyamid 4.6 etwa 50% Glasfaseranteil aufweist.

10. Torsionsschwingungsdämpfer (1) nach einem der vorangegangenen Ansprüche, **dadurch gekennzeichnet, dass** das wenigstens eine Versteifungselement (14, 114, 214) im Spritzgußverfahren hergestellt ist.

11. Torsionsschwingungsdämpfer (1) nach einem der vorangegangenen Ansprüche bei dem die Schraubendruckfedern (9.1, 10.1; 9.2, 10.2; 9.3, 10.3; 9.4, 10.4; 9.5, 10.5) zwischen den Stirnseiten (11.1, 11.2, 12.1, 12.2, 12.3, 12.4, 12.5, 12.6, 12.7, 12.8) von Stopperschuhen (3.1, 3.2) und/oder Gleitschuhen (4.1, 4.2, 4.3, 4.4) angeordnet sind, **dadurch gekennzeichnet, dass** das wenigstens eine Versteifungselement (14, 114, 214) verschiebefest mit einer der Stirnseiten (11.1, 11.2, 12.1, 12.2, 12.3, 12.4, 12.5, 12.6, 12.7, 12.8) verbunden ist.

12. Torsionsschwingungsdämpfer (1) nach Anspruch 11, **dadurch gekennzeichnet, dass** das wenigstens eine Versteifungselement einstückig mit dem Stopperschuh (3.1, 3.2) oder dem Gleitschuh (4.1, 4.2, 4.3, 4.4) ausgebildet ist.

13. Versteifungselement (14, 114, 214) für einen Torsionsschwingungsdämpfer (1) nach einem der vorangegangenen Ansprüche.

## Claims

1. Torsional vibration damper (1) with a drive-side transmission element (2.1) and an output-side transmission element (2.2) which can be deflected in a rotational manner about an axis (ax) in relation to the drive-side transmission element (2.1) and is connected to the drive-side transmission element (2.1) via at least one helical compression spring (9.1, 9.2, 9.3, 9.4, 9.5, 10.1, 10.2, 10.3, 10.4, 10.5), wherein at least one of the helical compression springs (9.1, 9.2, 9.3, 9.4, 9.5, 10.1, 10.2, 10.3, 10.4, 10.5) engages, at least over part of its extension length, around at least one stiffening element (14, 114, 214), wherein at least one stiffening element (14, 114, 214) has a securing device (15, 115, 215, 217, 116.1, 116.2) which restricts the displaceability of the at least one stiffening element (14, 114, 214) in relation to at least one of the helical compression springs (9.1, 9.2, 9.3, 9.4, 9.5, 10.1, 10.2, 10.3, 10.4, 10.5), **characterized in that** the securing device comprises a fixing means (116.1, 116.2) for fixing at least one of the at least one helical compression spring (10.1, 10.2, 10.3, 10.4, 10.5) on the at least one stiffening element (114), the fixing means comprising a clamping disc or a plurality of clamping discs or a cam or a plurality of cams (116.1, 116.2) which are arranged such that they protrude radially on the at least one stiffening element (114).

2. Torsional vibration damper (1) according to Claim 1, **characterized in that** the securing device comprises at least one spring plate (15, 115, 215, 217) which is carried by the at least one stiffening element (14, 114, 214) and on which one end side of at least one of the helical compression springs (9.1, 9.2, 9.3, 9.4, 9.4, 10.1, 10.2, 10.3, 10.4, 10.5) can be supported.

3. Torsional vibration damper (1) according to one of the preceding claims, **characterized in that** the extension length of the at least one stiffening element (14, 114, 214) is selected in such a manner that at least one of the helical compression springs (9.1, 9.2, 9.3, 9.4, 9.5, 10.1, 10.2, 10.3, 10.4, 10.5) is prevented from being compressed to the full extent.

4. Torsional vibration damper (1) according to Claim 3, in which the stiffening element (14, 114, 214) is of dimensionally stable design, **characterized in that** the extension length of the at least one stiffening element (14, 114, 214) is greater than the greatest possible compression of at least one of the helical compression springs (9.1, 9.2, 9.3, 9.4, 9.5, 10.1, 10.2, 10.3, 10.4, 10.5).

5. Torsional vibration damper (1) according to one of the preceding claims, **characterized in that** at least one of the helical compression springs (9.1, 9.2, 9.3, 9.4, 9.5, 10.1, 10.2, 10.3, 10.4, 10.5) engages, at least over part of its extension length, around two stiffening elements (14, 114, 214) which are arranged one behind the other in the axial direction (ax) and which each carry at least one spring plate (15, 115, 215, 217) on one end side, and **in that** the at least one helical compression spring (9.1, 9.2, 9.3, 9.4, 9.5, 10.1, 10.2, 10.3, 10.4, 10.5) can be supported on one end side on the at least one spring plate (15, 115, 215, 217) of the one stiffening element (14, 114, 214) and on the other end side on the at least one spring plate (15, 115, 215, 217) of the other stiffening element (14, 114, 214).

6. Torsional vibration damper (1) according to Claim 5, **characterized in that** the sum of the extension lengths of the two stiffening elements (14, 114, 214) is selected in such a manner that at least one of the helical compression springs (9.1, 9.2, 9.3, 9.4, 9.5, 10.1, 10.2, 10.3, 10.4, 10.5) is prevented from being compressed to the full extent.

7. Torsional vibration damper (1) according to one of the preceding claims, **characterized in that** two or more helical compression springs (9.1, 9.2, 9.3, 9.4, 9.5, 10.1, 10.2, 10.3, 10.4, 10.5) lying coaxially one inside the other engage around the at least one stiffening element (214), and **in that** the securing device comprises two or more spring plates (215, 217) which are supported by the at least one stiffening element (214) and are spaced apart in the axial direction and on which in each case one end side of at least one of the helical compression springs (9.1, 10.1; 9.2, 10.2; 9.3, 10.3; 9.4, 10.4; 9.5, 10.5) lying coaxially one inside the other can be supported.

8. Torsional vibration damper (1) according to one of the preceding claims, **characterized in that** the at least one stiffening element (14, 114, 214) is manufactured from polyamide 4.6.

9. Torsional vibration damper (1) according to Claim 8, **characterized in that** the polyamide 4.6 has a glass fibre content of approximately 50%.

10. Torsional vibration damper (1) according to one of the preceding claims, **characterized in that** the at least one stiffening element (14, 114, 214) is produced by injection moulding.

11. Torsional vibration damper (1) according to one of the preceding claims, in which the helical compression springs (9.1, 10.1; 9.2, 10.2; 9.3, 10.3; 9.4, 10.4; 9.5, 10.5) are arranged between the end sides (11.1, 11.2, 12.1, 12.2, 12.3, 12.4, 12.5, 12.6, 12.7, 12.8) of stopper blocks (3.1, 3.2) and/or sliding blocks (4.1, 4.2, 4.3, 4.4), **characterized in that** the at least one stiffening element (14, 114, 214) is connected to one of the end sides (11.1, 11.2, 12.1, 12.2, 12.3, 12.4, 12.5, 12.6, 12.7, 12.8) in a manner fixed against displacement.

12. Torsional vibration damper (1) according to Claim 11, **characterized in that** the at least one stiffening element is formed integrally with the stopper block (3.1, 3.2) or the sliding block (4.1, 4.2, 4.3, 4.4).

13. Stiffening element (14, 114, 214) for a torsional vibration damper (1) according to one of the preceding claims.

## Revendications

1. Amortisseur de vibrations de torsion (1) avec un élément de transmission (2.1) côté menant et un élément de transmission (2.2) côté mené, qui peut être dévié en rotation autour d'un axe (ax) par rapport à l'élément de transmission (2.1) côté menant et qui est relié à l'élément de transmission (2.1) côté menant par l'intermédiaire d'au moins un ressort de pression à boudin (9.1, 9.2, 9.3, 9.4, 9.5, 10.1, 10.2, 10.3, 10.4, 10.5), sachant qu'au moins un des ressorts de pression à boudin (9.1, 9.2, 9.3, 9.4, 9.5, 10.1, 10.2, 10.3, 10.4, 10.5) s'engage sur au moins une partie de son étendue longitudinale autour d'au moins un élément de renforcement (14, 114, 214), sachant qu'au moins un élément de renforcement (14, 114, 214) présente un dispositif de maintien (15, 115, 215, 217, 116.1, 116.2) qui limite la faculté de déplacement de l'élément de renforcement (14, 114, 214) au moins unique par rapport au ressort de pression à boudin au moins unique (9.1, 9.2, 9.3, 9.4, 9.5, 10.1, 10.2, 10.3, 10.4, 10.5), **caractérisé en ce que** le dispositif de maintien comprend un moyen de fixation (116.1, 116.2) pour fixer le ressort de pression à boudin au moins unique (10.1, 10.2, 10.3, 10.4, 10.5) sur l'élément de renforcement au moins unique (114), sachant que le moyen de fixation comprend une ou plusieurs plaques de serrage ou un ou plusieurs ergots (116.1, 116.2) qui sont disposés en saillie radiale sur l'élément de renforcement au moins unique (114).

2. Amortisseur de vibrations de torsion (1) selon la revendication 1, **caractérisé en ce que** le dispositif de maintien comprend au moins une coupelle de ressort (15, 115, 215, 217) qui est portée par l'élément de renforcement au moins unique (14, 114, 214) et sur laquelle peut s'appuyer par une extrémité le ressort de pression à boudin au moins unique (9.1, 9.2, 9.3, 9.4, 9.5, 10.1, 10.2, 10.3, 10.4, 10.5).

3. Amortisseur de vibrations de torsion (1) selon l'une des revendications précédentes, **caractérisé en ce que** l'étendue longitudinale de l'élément de renforcement au moins unique (14, 114, 214) est choisie de telle sorte qu'on empêche la compression à bloc du ressort de pression à boudin au moins unique (9.1, 9.2, 9.3, 9.4, 9.5, 10.1, 10.2, 10.3, 10.4, 10.5).

4. Amortisseur de vibrations de torsion (1) selon la revendication 3, dans lequel l'élément de renforcement (14, 114, 214) est réalisé de forme stable, **caractérisé en ce que** l'étendue longitudinale de l'élément de renforcement au moins unique (14, 114, 214) est supérieure à la compression maximale possible du ressort de pression à boudin au moins unique (9.1, 9.2, 9.3, 9.4, 9.5, 10.1, 10.2, 10.3, 10.4, 10.5).

5. Amortisseur de vibrations de torsion (1) selon l'une des revendications précédentes, **caractérisé en ce que** le ressort de pression à boudin au moins unique (9.1, 9.2, 9.3, 9.4, 9.5, 10.1, 10.2, 10.3, 10.4, 10.5) s'engage sur au moins une partie de son étendue longitudinale autour de deux éléments de renforcement (14, 114, 214) disposés l'un à la suite de l'autre en direction axiale (ax) qui portent chacun à une extrémité au moins une coupelle de ressort (15, 115, 215, 217), et **en ce que** le ressort de pression à boudin au moins unique (9.1, 9.2, 9.3, 9.4, 9.5, 10.1, 10.2, 10.3, 10.4, 10.5) peut s'appuyer par une extrémité sur la coupelle de ressort au moins unique (15, 115, 215, 217) de l'un des éléments de renforcement (14, 114, 214) et par l'autre extrémité sur la coupelle de ressort au moins unique (15, 115, 215, 217) de l'autre élément de renforcement (14, 114, 214).

6. Amortisseur de vibrations de torsion (1) selon la revendication 5, **caractérisé en ce que** la somme des étendues longitudinales des deux éléments de renforcement (14, 114, 214) est choisie de telle sorte qu'on empêche la compression à bloc du ressort de pression à boudin au moins unique (9.1, 9.2, 9.3, 9.4, 9.5, 10.1, 10.2, 10.3, 10.4, 10.5).

7. Amortisseur de vibrations de torsion (1) selon l'une des revendications précédentes, **caractérisé en ce que** deux ressorts de pression à boudin (9.1, 9.2, 9.3, 9.4, 9.5, 10.1, 10.2, 10.3, 10.4, 10.5) ou davantage, disposés coaxialement les uns dans les autres, s'engagent autour de l'élément de renforcement au moins unique (214) et **en ce que** le dispositif de maintien comprend deux coupelles de ressort (215, 217) ou davantage, portées par l'élément de renforcement au moins unique (214) et distantes en direction axiale, sur lesquelles peut respectivement s'appuyer par une extrémité au moins un des ressorts de pression à boudin (9.1, 10.1 ; 9.2, 10.2 ; 9.3, 10.3 ; 9.4, 10.4 ; 9.5, 10.5) disposés coaxialement les uns dans les autres.

8. Amortisseur de vibrations de torsion (1) selon l'une des revendications précédentes, **caractérisé en ce que** l'élément de renforcement au moins unique (14, 114, 214) est fabriqué en polyamide 4.6.

9. Amortisseur de vibrations de torsion (1) selon la revendication 8, **caractérisé en ce que** le polyamide 4.6 présente une part d'environ 50% de fibres de verre.

10. Amortisseur de vibrations de torsion (1) selon l'une des revendications précédentes, **caractérisé en ce que** l'élément de renforcement au moins unique (14, 114, 214) est fabriqué par moulage par injection.

11. Amortisseur de vibrations de torsion (1) selon l'une des revendications précédentes, dans lequel les ressorts de pression à boudin (9.1, 10.1 ; 9.2, 10.2 ; 9.3, 10.3 ; 9.4, 10.4 ; 9.5, 10.5) sont disposés entre les côtés frontaux (11.1, 11.2, 12.1, 12.2, 12.3, 12.4, 12.5, 12.6, 12.7, 12.8) de patins de butée (3.1, 3.2) et/ou de patins de guidage (4.1, 4.2, 4.3, 4.4), **caractérisé en ce que** l'élément de renforcement au moins unique (14, 114, 214) est relié sans possibilité de translation à un des côtés frontaux (11.1, 11.2, 12.1, 12.2, 12.3, 12.4, 12.5, 12.6, 12.7, 12.8).

12. Amortisseur de vibrations de torsion (1) selon la revendication 11, **caractérisé en ce que** l'élément de renforcement au moins unique est réalisé d'un seul tenant avec le patin de butée (3.1, 3.2) ou le patin de guidage (4.1, 4.2, 4.3, 4.4).

13. Élément de renforcement (14, 114, 214) pour un amortisseur de vibrations de torsion (1) selon l'une des revendications précédentes.
